# EUROPEAN PATENT APPLICATION

(11) **EP 0 820 182 A2**
(43) Date of publication of application: **21.01.1998**
(21) Application number: 97112094.4
(22) Date of filing: 15.07.1997
(51) Int. Cl.: H04M 3/50

(54) **Dynamic mailbox messaging system**

(30) Priority: 15.07.1996 US 680944
(71) Applicant: AT&T Corp., New York, NY 10013-2412 (US)
(72) Inventor: Tow, Agnes C., Middletown, NJ 07748 (US)
(74) Representative: KUHNEN, WACKER & PARTNER

(57) **Abstract**

A mailbox messaging system stores a message from a caller to a mailbox owner and modifies on demand a mailbox owner's mailbox structure on at least one storage device. When messages are deleted from the mailbox, the disk space allocated for the mailbox on one or more storage devices is reduced or deallocated. Conversely, when messages are added to the mailbox, the disk space allocated for the mailbox on the storage devices is increased to meet demand. The messages associated with a given mailbox may be located on any number of storage devices and need not be stored consecutively on the same storage device area or on the same storage device. The storage devices can be located at different locations over the communication network.

## Description

### Field of the Invention

The present invention relates to communication services. More specifically, this invention relates to a mailbox messaging system where the disk space allocated for storing the messages associated with each mailbox is dynamically modified to meet usage demands.

### Background of the Invention

Electronic mailboxes are systems wherein messages from one party to another party or parties may be communicated and stored for later retrieval by the message recipient. U.S. Patent 4,932,042 issued to Baral et al., on June 5, 1990 and assigned to AT&T Bell Laboratories is herein incorporated by reference. The forms of the communicated messages are virtually limitless and include audio, video, electronic text, electronic graphics and/or any combination thereof. The hardware and software associated with known mailbox messaging systems are typically configured as adjunct platforms, independent from the communication network switching hardware and software. By locating the hardware and software associated with mailbox messaging systems as adjunct platforms, the network intelligence is increased and communication services become decentralized, ubiquitous, and easily, quickly and inexpensively modified.

Some known mailbox messaging systems, configured as adjunct platforms, comprise at least one workstation or personal computer (PC) to perform service-specific processing and another workstation, PC or mainframe computer to act as a file server for a cluster of storage devices where messages are stored. Configuring mainframe computers to act as file servers for a cluster of storage devices, however, is no longer cost effective with the advent of computer technologies.

As an alternative, other known mailbox messaging systems are operated from at least one workstation and/or at least one PC, for example, through a local-area network (LAN). See, for example, U.S. Patent 4,972,461 to Brown et al, issued on November 20, 1990, and assigned to AT&T Bell Laboratories. Mailbox messaging systems that utilize PCs benefit from the low costs and easy upgradability associated with PCs. In these known systems, the workstation performs the service-specific processing, and the PCs interface with the callers and store, retrieve and delete messages. Each PC includes a processor with RAM memory, hard disks, a LAN interface, voice recognition boards, voice response boards, basic rate interface (BRI) boards, and network interface boards (e.g., T1 or E1 boards) to connect to the external network (e.g., directly or through a private branch exchange (PBX)). The voice recognition boards perform speech recognition on a caller's voice commands. The voice response boards provide computer-driven, voice-simulated responses to direct a caller's selections. The BRI or LAN interface boards connect the PC to a private branch exchange (PBX) for a host controlling the PBX functions externally.

Each mailbox owner is assigned, by the workstation, to one specific PC from the series of PCs through which a caller can leave a message and through which a mailbox owner can retrieve and delete caller's messages. The mailbox owner also stores and deletes a greetings message through this specific PC. Thus, a given PC is responsible for managing a fixed number of specific mailbox owners (e.g., 500 owners per PC). Each PC controls specifically assigned storage devices which have a fixed amount of disk space allocated for each mailbox owner. The workstation and each PC are connected together, for example, through a LAN. Because each user is assigned to a particular PC and allocated a fixed amount of space on the storage device associated with that PC, additional PCs and storage devices must be incrementally added to the system as new mailbox owners are added to the mailbox messaging system.

These known mailbox messaging systems that utilize PCs, however, suffer several shortcomings. These known mailbox messaging systems do not take into account usage differences among the mailbox owners. Specifically, a given mailbox is managed by a specifically designated PC and cannot be reassigned to a different PC as mailbox demand changes. Furthermore, disk space is allocated on a specific storage device and that allocated disk space cannot be changed as demand changes.

### Summary of the Invention

An object of the present invention is to improve upon existing electronic mailbox messaging services by dynamically allocating disk space for storing messages on storage devices as the disk space is required or becomes available.

Each subscriber has a customer profile that includes the mailbox structure and disk allocation information in a customer database. The disk space associated with a mailbox is allocated or deallocated on demand from a common pool of storage devices. When the messaging service subscriber requests the creation of a mailbox and a mailbox for that subscriber does not previously exist, the workstation creates customer profile information within a customer database on the workstation. When messages are deleted from the mailbox, the workstation reduces the space associated with the mailbox on the storage devices by updating the customer database on the workstation. Messages can also be deleted automatically after a predetermined period of time. This previously used disk space now is available to store future messages associated with any mailbox. Conversely, when messages are added to the mailbox, the workstation increases the space associated with the mailbox on the storage devices by updating the customer database on the workstation. Thus, the present invention adjusts on demand the disk space associated with the mailbox as the number of messages changes. The messages associated with a given mailbox may be located on any number of storage devices and need not be stored consecutively on the same storage device area or on the same storage device. Multiple storage devices can be located at multiple locations. Alternatively, messages from a mailbox scattered over several storage devices can be consolidated on one storage device for better performance and disk utilization.

### Brief Description of the Drawings

Fig. 1 illustrates a system block diagram of a system for providing a dynamic mailbox messaging service.

Fig. 2 illustrates an embodiment of a system configuration of an adjunct platform that performs the dynamic mailbox messaging service.

### Detailed Description

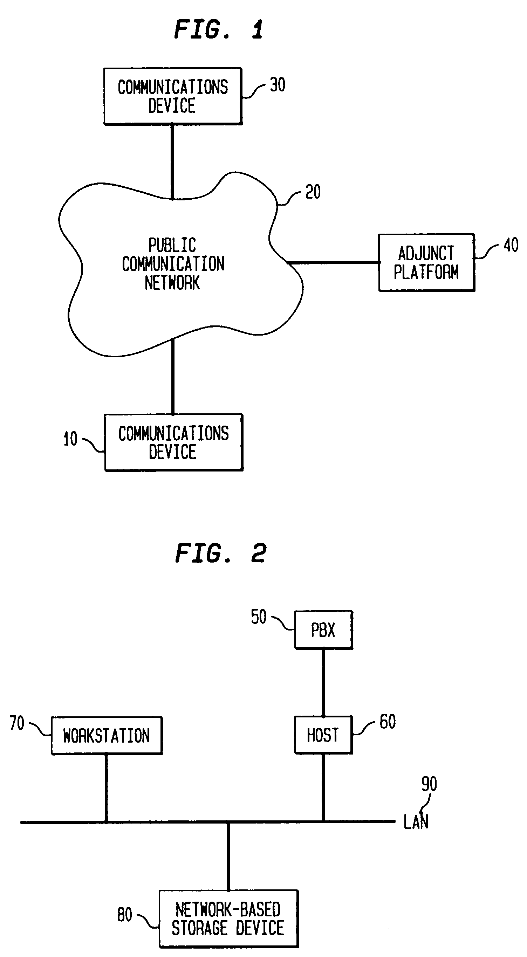

Fig. 1 illustrates a possible system configuration for the present invention. Communications device 10, which can be any of a variety of types, such as a telephone, personal computer, etc., is connected to an external communication network 20 in well-known fashion. A caller can initiate a call, for example, by dialing a desired phone number whereby conventional DTMF "touch tone" audio signals are transmitted through communication network 20. Alternatively, automatic speech recognition (ASR) techniques can also be used; for example, the caller can dictate the phone number into the phone. Communication network 20 detects the DTMF signals and through various switches, computer processors and software connects the communication device 10 of the caller to the communication device 30 of the destination called party. Similarly, communication devices 10 and 30 can be variously connected to communication network 20, for example, through a PBX, a local exchange carrier (LEC), etc., or even directly connected to communication network 20. For the purposes of the following discussion, the caller is located at communication device 10 and the destination called party is located at communication device 30.

Adjunct platform 40 provides messaging services for the destination called party at communications device 30. As illustrated by Fig. 1, adjunct platform 40 can be connected directly to communication network 20. Communications device 10 accesses adjunct platform 40 via the external communication network 20. As discussed in conjunction with Fig. 2, adjunct platform 40 includes the voice storage devices, processor and software necessary to perform the messaging service of the present invention.

Fig. 2 illustrates a possible configuration of adjunct platform 40. Adjunct platform 40 can provide messaging services for a public network (e.g. the Public Switching Telephone Network (PSTN)) or a private network (e.g. the enterprise network). Adjunct platform 40 can be connected to public communication network 20, for example, through PBX 50. PBX 50 is connected to at least one host 60. Host 60 is computer processor, for example, a personal computer (PC) or workstation. Host 60 interfaces with callers through voice recognition and voice response boards via network interface boards (e.g., T1, E1, etc.). Although Fig. 2 illustrates one host 60, more than one host 60 can be configured within adjunct platform 40 and can be connected to PBX 50.

As illustrated in Fig. 2, host 60 is connected to network-based storage device 80 through LAN 90. A LAN is used for illustration purposes; adjunct platform can be connected by a wide-area network (WAN), etc. Network-based storage device 80 (e.g., Intel pentium-based processor with RAID (Redundant Arrays Inexpensive Disks drives)) contains sufficient processor capabilities to manage the stored data over the network. Although Fig. 2 shows one network-based storage device 80 for illustrative purposes, more than one network-based storage device 80 is possible. The number of network-based storage devices are dependent upon the disk storage requirements of the mailbox messaging service. As an alternative to a LAN 90, adjunct platform 40 can be interconnected through wide-area network (WAN). Network-based storage devices 80 can be located at multiple locations.

Host 60 is also connected to workstation 70 through LAN 90. Workstation 70 controls the service-specific logic and modifies on demand a mailbox owner's mailbox structure on at least one of the network-based storage devices 80. Each subscriber has a customer profile in a customer database on workstation 70. The customer profile includes the mailbox structure and disk allocation information associated with that subscriber. Although workstation 70 is shown in Fig. 2, the service-specific processing alternatively can be controlled by host 60, depending upon the requirements of the mailbox messaging service, and workstation 70 would not be necessary. It is also possible to configure adjunct platform 40 with more than one workstation 70.

When a call is received at PBX 50, the call is passed through host 60 to workstation 70. Workstation 70 determines the nature of the call and accesses the customer database to identify the proper customer. The customer database is located at workstation 70, although the customer database can located elsewhere, such as a network-based storage device. Workstation 70 then starts the appropriate call flow to direct the call to an available host 60 through LAN 90. At host 60, voice response and recognition processes are enacted to obtain information from the caller, e.g., mailbox identification number, mailbox password, authenticate whether the caller is the mailbox owner, service-specific information, etc. Service-specific information may include a caller's request to leave a message, or a mailbox owner's request to retrieve a message, delete a message, record a new greetings message, etc. Once the caller's information is obtained, control passes back to workstation 70 through LAN 90.

Then, workstation 70 checks the status of the mailbox associated with the caller's request. For example, the mailbox status can be identified in a status field where 0 indicates the mailbox is not created, 1 indicates that the mailbox is active and 2 indicates the mailbox is suspended. If the caller is a service subscriber who wants to create a mailbox and a mailbox is not yet created, then a greetings message is obtained from the future mailbox owner and stored. The greetings message may be stored on either a network-based storage device 80 or on storage capability associated with workstation 70. Workstation 70 then creates customer profile information for the mailbox owner within a customer database on workstation 70. The mailbox owner's profile includes the memory location of the mailbox owner's stored greetings message. The customer database will be updated with the memory locations of the messages as they are stored on network-based storage devices 80. No disk space on storage devices 80, however, is allocated at the time that the mailbox is set up by the mailbox owner. Disk space is allocated on storage devices 80 as messages are left by callers after creation of the mailbox. When messages are added to the mailbox, the workstation increases the space associated with the mailbox on storage devices 80 by updating the customer database on workstation 70. Thus, the disk space associated with the mailbox adjusts on demand as the number of messages changes.

The messages associated with a given mailbox may be located on any number of storage devices 80 and need not be stored consecutively on the same storage device area or on the same storage device. After the mailbox is created, the mailbox status in the database at workstation 70 is changed to 1 as active.

If the caller is not the mailbox owner but someone who wants to leave a message for a mailbox owner, workstation 70 checks the status of the requested mailbox. If mailbox status indicates that the mailbox exists, then workstation 70 receives the message and allocates an appropriate amount of disk space on storage devices 80. At workstation 70, the customer database is updated with the location on storage devices 80 of a newly received message. The location on storage devices 80 of the received message can be linked together with the storage device locations of other previously recorded, undeleted messages for that mailbox owner in a variety of ways. For example, the customer database may contain the memory location on storage devices 80 of each message for the mailbox. Alternatively, the customer database may contain the memory location of one message from which all other stored messages for the mailbox are linked together by data pointers.

If the caller is the mailbox owner of a mailbox already in existence, the mailbox owner has several service options. The mailbox owner can examine, save and/or delete received messages, and/or create new messages to send to other recipients. Messages that the mailbox owner chooses to delete are temporarily assigned to a wastebasket folder. After the mailbox owner leaves the mailbox messaging system, the message in the wastebasket folder is deleted by removing the disk space on the storage devices 80 by updating the customer database on workstation 70 and the disk space is reallocated as available. This previously use disk space is now available to store any future messages associated with any mailbox owner.

The mailbox messaging system, as managed at workstation 70, can also automatically perform maintenance on the mailboxes based on predetermined maintenance rules. After a period of time predetermined by the mailbox owner (e.g., one month), read and expired messages can be deleted and the disk space reallocated as available for other messages associated with any mailbox. Mailboxes that have remained empty for more than a predetermined time (e.g., six months) can be deleted. The status of that mailbox is then updated to indicate that the mailbox no longer exists and would need to be recreated if required by the owner. Messages from a mailbox scattered over several storage devices 80 can be consolidated on one device for better performance and disk utilization.

At the direction of the service provider, the mailbox messaging system can suspend a mailbox by changing the status field of that mailbox. When a mailbox is suspended, the mailbox owner can no longer receive additional messages or retrieve stored messages. Thus, received, and potentially important messages are preserved until the mailbox can be reactivated, while suspending the mailbox owner's access until the mailbox owner can satisfy the service provider.

It should, of course, be understood that while the present invention has been described in reference to particular applications and configurations, other arrangements should be apparent to those of ordinary skill in the art. For example, in addition to voice messages, the present invention can manage fax messages, electronic text messages, multimedia messages, and/or any combination thereof. In such a case, in addition to the voice recognition and voice response boards, different and/or additional software and hardware may be necessary to manage different types of messages.

## Claims

1. A method for storing a message from a caller to a mailbox owner, within a communication system, characterized by the steps of:
(a) receiving a message from the caller;
(b) determining a status and a location of a mailbox owner's mailbox on a processor; and
(c) storing the message on a storage device, said storing step includes modifying on demand the mailbox owner's mailbox structure on the storage device.

2. The method of claim 1, characterized in that said determining step (b) includes creating a customer profile within a customer database on the processor, when the mailbox does not exist.

3. The method of claim 1, further characterized by the step of:
(d) deleting a customer mailbox within a customer database on the processor when the mailbox contains no messages for a predetermined period of time.

4. The method of claim 1, further characterized by the step of:
(d) deleting messages associated with the mailbox after a predetermined period of time.

5. The method of claim 1, characterized in that said storing step (c) reduces the space allocated to the mailbox on the storage device when messages are deleted from the mailbox.

6. The method of claim 1, characterized in that the space on the storage device containing the deleted messages is available for future messages associated with any mailbox.

7. The method of claim 1, characterized in that said storing step (c) increases the space allocated to the mailbox on the storage device when messages are added to the mailbox.

8. The method of claim 1, characterized in that messages associated with the mailbox are stored on said storage device and at least one other storage device.

9. The method of claim 8, characterized in that the storage devices are located at a plurality of locations.

10. The method claim 8, further characterized by the step of:
(d) consolidating, on to one storage device, the message with other messages associated with the mailbox located on said storage device and other storage devices.

11. A mailbox messaging system, within a communication system, for storing a message from a caller to a mailbox owner, characterized by:
a storage device; and
a processor connected to said storage device, said processor interfacing with the caller and modifying on demand the mailbox owner's mailbox structure on said storage device.

12. The mailbox messaging system of claim 11, characterized in that said processor creates a customer profile within a customer database on said processor when the mailbox owner requests the mailbox and the mailbox did not previously exist.

13. The mailbox messaging system of claim 11, characterized in that said processor deletes a customer profile within a customer database on said processor when the mailbox contains no messages for a predetermined period of time.

14. The mailbox messaging system of claim 11, characterized in that said processor deletes messages associated with the mailbox after a predetermined period of time.

15. The mailbox messaging system of claim 11, characterized in that said processor reduces the space allocated to the mailbox on said storage device when messages are deleted from the mailbox.

16. The mailbox messaging system of claim 15, characterized in that the space on said storage device containing the deleted messages is available for future messages associated with any mailbox.

17. The mailbox messaging system of claim 11, characterized in that said processor increases the space allocated to the mailbox on said storage device when the message is added to the mailbox.

18. The mailbox messaging system of claim 11, characterized in that messages associated with the mailbox are stored on said storage device and on other storage devices.

19. The mailbox messaging system of claim 18, characterized in that said storage device and other storage devices are located at a plurality of locations.

20. The mailbox messaging system of claim 18, characterized in that messages associated with the mailbox stored on said storage device and on other storage devices are consolidated on one storage device.
